# EUROPEAN PATENT SPECIFICATION

(11) **EP 2 778 283 B1**
(45) Date of publication and mention of the grant of the patent: **11.01.2017**
(21) Application number: 14156590.3
(22) Date of filing: 25.02.2014
(51) Int. Cl.: D21H 19/38, D21H 19/44, D21H 19/58, C09D 7/12, C08K 13/02, D21H 19/64

(54) **PAPER COATING FORMULATION**
PAPIERBESCHICHTUNGSFORMULIERUNG
FORMULATION DE REVÊTEMENT DE PAPIER

(30) Priority: 14.03.2013 US 201361781136 P
(43) Date of publication of application: 17.09.2014
(73) Proprietor: Rohm and Haas Company, Philadelphia, PA 19106-2399 (US); Dow Global Technologies LLC, Midland, MI 48674 (US)
(72) Inventor: Frey, Robert C., Churchville, PA Pennsylvania 18966 (US); Gao, Wei, Ft. Washington, PA Pennsylvania 19034 (US); Roper III, John A., Midland, MI Michigan 48462 (US); Watson, James, Harrisburg, NC North Carolina 28075 (US)
(74) Representative: Houghton, Mark Phillip

(56) References cited:
- EP-A1- 0 959 176
- EP-A1- 1 923 504
- WO-A1-2004/035925
- US-A- 4 154 899
- US-A- 4 265 977
- US-A- 5 273 824
- US-A1- 2009 170 982

## Description

### Background of the Invention

The present invention relates to a pigmented paper coating with improved brightness.

Titanium dioxide (TiO₂) is used as a pigment in paperboard coatings on darker substrates such as recycled board and unbleached Kraft board to improve the optical properties such as brightness, opacity and appearance. In addition, TiO₂ is used in lightweight coated paper to improve opacity, or in premium coated paper grades to improve the brightness and appearance. Motivated by the high cost of TiO₂, papermakers are looking for ways to either reduce its usage or improve its efficiency or both.

In the absence of modifiers such as dispersants, TiO₂ particles will crowd, leading to inefficient hiding. However, even with well dispersed TiO₂ there can be crowding of TiO₂ particles as the level of TiO₂ is increased. Furthermore, it is known, for example, (2001 TAPPI Coating Conference Paper by Imerys on "Optimum Dispersion In Blade Coating Operations;" also, Chapter 3 on "Inorganic Salt Dispersants" in Practical Dispersion: A Guide to Understanding and Formulating Slurries by R. F. Conley, Wiley Press) that over-dispersing of a coating will cause pigment particles to flocculate, which can lead to an improvement in coating brightness on the order of 0.5 to 1.5 points. This improvement in brightness, however, is attributed to an increase in the porosity of the coating, which increases the amount of light scattering from air voids, and not to the increased efficiency of TiO₂ dispersion in the coating. Furthermore, the brightness advantage realized from using high levels of dispersants is greatly reduced after calendaring to less than 1 point because the voids created upon the addition of the dispersant are removed during the calendaring process.

US 8,043,476 discloses a paper or paperboard coating formulation with improved viscosity stability comprising a phosphate or phosphonate functionalized acrylic polymer binder, TiO₂, and a polyphosphate dispersant. Although the phosphate or phosphonate functionality is known to enhance adsorptivity of the binder to the TiO₂, thereby improving the efficiency of its usage, the presence of phosphates or phosphonates often adversely affect viscosity stability of the binder and water sensitivity of the coating. Moreover, latexes prepared with the commonly used phosphate monomer, phosphoethyl methacrylate (PEM), invariably contain impurities that are of concern to governmental regulatory agencies (e.g., the FDA) that regulate products that may come in contact with food. Accordingly, it would be an advance in the art of paper and paperboard coating formulations to design a formulation that overcomes the disadvantages of phosphate and phosphonate functionalized binders, while still achieving the benefits of enhanced brightness.

### Summary of the Invention

The present invention addresses a need in the art by providing a composition comprising an aqueous dispersion of a) from 3 to 25 weight percent polymeric binder particles containing a substantial absence of phosphate and phosphonate groups; b) from 5 to 35 weight percent rutile TiO₂ having a purity of at least 98% and a substantial absence of inorganic silica; c) from 0.1 to 2 weight percent of a dispersant which is tetrasodium pyrophosphate, tetrapotassium pyrophosphate, sodium tripolyphosphate, potassium tripolyphosphate, or sodium hexametaphosphate; wherein the polymeric binder particles comprise vinyl acetate, vinyl-acrylic, styrene-acrylic, or styrene-butadiene polymer particles; and wherein the weight percentages are all based on the weight of total solids of the composition. The composition of the present invention addresses a need in the art by providing a more uniform distribution of TiO₂ in a final dry coating, which allows for the removal of about 20% to 40% of the TiO₂ without a loss in optical properties.

### Detailed Description of the Invention

The present invention addresses a need in the art by providing a composition comprising an aqueous dispersion of a) from 3 to 25 weight percent polymeric binder particles containing a substantial absence of phosphate and phosphonate groups; b) from 5 to 35 weight percent rutile TiO₂ having a purity of at least 98% and a substantial absence of inorganic silica; c) from 0.1 to 2 weight percent of a dispersant which is tetrasodium pyrophosphate, tetrapotassium pyrophosphate, sodium tripolyphosphate, potassium tripolyphosphate, or sodium hexametaphosphate; wherein the polymeric binder particles comprise vinyl acetate, vinyl-acrylic, styrene-acrylic, or styrene-butadiene polymer particles; and wherein the weight percentages are all based on the weight of total solids of the composition.

The binder particles preferably have a volume average particle size in the range of from 50 nm, more preferably from 80 nm, to 500 nm, more preferably to 300 nm. Preferably the weight percent of binder, based on the weight of total solids of the composition, is from 5 to 25 weight percent. The binder particles comprise a substantial absence of phosphate or phosphonate groups. As used herein, the term "substantial absence of phosphate or phosphonate groups" means that the binder particles contain, based on the weight of the binder, less than 0.05 weight percent, preferably less than 0.01 weight percent, more preferably less than 0.001 weight percent, and most preferably 0 weight percent phosphate and phosphonate groups.

The aqueous composition preferably comprises from 5 to 25 weight percent rutile TiO₂, based on the weight of total solids of the composition; the TiO₂ preferably has an optical density of from 1.05 to 1.15, a refractive index of from 2.70 to 2.75, and a particle size distribution with a geometric standard deviation of 1.45 to 1.50 as measured using a HORIBA LA-900 particle analyzer. A commercially available TiO₂ is RPS Vantage TiO₂. The TiO₂ useful in the composition of the present invention is untreated with inorganic silica; therefore, it is peculiarly useful in paper coating applications as opposed to paint formulations, which require TiO₂ treated with inorganic silica.

The dispersant is preferably present in the composition at 0.2 to 0.6 weight percent, based on total solids of the composition.

The composition of the present invention advantageously includes other additives including auxiliary pigments, such as clays and calcium carbonate; rheology modifiers; natural binders, such as proteins and starch; optical brightening agents; lubricants; antifoamers; crosslinkers; and other dispersants, such as polyacrylic acid based dispersant. The particle size of auxiliary pigments useful for the composition of the present invention is preferably finer than 2 µm, more preferably 80% to 100% by weight finer than 2 µm, as measured using Sedigraph. This preferred size range is considerably smaller than what is typically used in paint formulations.

The composition is useful as a coating for coated or uncoated paper or paperboard and can be applied in a single or multiple coats to a final film thickness preferably in the range of from 5 µm, more preferably from 10 µm, to 35 µm, more preferably to 20 µm, which is about one-third to one-tenth the film thickness of typical paint coatings. Thus, in another aspect, the present invention is a laminate comprising coated or uncoated paper or paperboard; and a 5-to 35-µm thick layer of a film adhered to the paper or paperboard; wherein the film comprises the residuum of the composition of the present invention after removal of water.

It has surprisingly been discovered that the composition of the present invention gives paper or paperboard coatings with improved brightness, without additional loadings of TiO₂, and using binder that contains a substantial absence or complete absence of phosphate and phosphonate groups.

While not bound by theory, it is believed that the TiO₂ typically used in paper coatings, which has a purity of at least 98% and a substantial absence of inorganic silica, forms agglomerates in the wet state in the presence of other coating components. These agglomerates produce crowding of TiO₂ in paper coatings, thereby reducing the efficiency of the TiO₂ performance, even at low levels of TiO₂ where crowding is not expected to occur. It is believed that the use of low molecular weight polyphosphate dispersants reverses the agglomeration of TiO₂ in the wet state, resulting in a more uniform distribution of TiO₂ in final dry coating. Conversely, it is believed that higher molecular weight polyacrylic acid polymeric dispersants, which are commonly used in paper coatings, are not able to diffuse into the wet agglomerates to redisperse the TiO₂ and therefore are not effective. The following examples demonstrate this effect.

### Abbreviations

| Product Name | Abbreviation |
|---|---|
| Kaomax Clay | Clay |
| RPS Vantage TiO₂ | RPS TiO₂ |
| Ti Pure R-746 TiO₂ | R-746 TiO₂ |
| POLYCO™ 3103NP Vinyl Acrylic Latex | 3103NP |
| POLYCO™ 3960 Vinyl Acrylic Latex | 3960 |
| RHOPLEX™ RM-232D HASE Rheology Modifier | RM-232D |
| ACUMER™ 9400 Acrylic Homopolymer Dispersant | 9400 |
| Sodium Hexametaphosphate (5% aqueous) | SHMP |
| Potassium Tripolyphosphate (5% aqueous) | KTPP |
| Tetrasodium Pyrophosphate | TSPP |

POLYCO, RHOPLEX, and ACUMER are all Trademarks of The Dow Chemical Company or its Affiliates.

### Examples

In the following examples 1-6 and comparative examples 1 and 2, the formulations include 25 parts RPS TiO₂ and 75 parts Clay, based on the weight of Clay and RPS TiO₂ solids.

### Comparative Example 1- Preparation of Coating without Dispersant

RPS TiO₂ (52.61 g, 71.28% solids) was added to Clay (168.44 g, 66.79% solids), 3103NP (59.44 g, 50.47% solids), then RM-232D (0.79 g, 28.32% solids), then DI water (110.22 g). The percent solids was 45.31%.

### Example 1 - Preparation of Coating Formulation with SHMP

RPS TiO₂ (52.61 g, 71.28% solids) was added to Clay (168.44 g, 66.79% solids), followed by addition of a mixture of SHMP (18.00 g, 5% solids) and 3103NP (59.44 g, 50.47% solids), then RM-232D (0.79 g, 28.32% solids), then DI water (108.55 g). The percent solids was 44.82%.

### Example 2 - Preparation of Coating Formulation with SHMP

The amounts described in Example 1 were used but the order of addition was changed. In this example, RPS TiO₂ was added to a mixture of SHMP and 3103NP, followed by addition of Clay, then RM-232D, then DI water. The percent solids was 45.32%.

### Example 3 - Preparation of Coating Formulation with SHMP

The preparation of Example 1 was followed except for the amounts of SHMP (24.00 g, 5% solids) and DI water (97.885 g). The percent solids was 45.35%.

### Example 4 - Preparation of Coating Formulation with TSPP

The preparation of Example 1 was followed except that TSPP (18.00 g, 5% solids) was used as the dispersant instead of SHMP. The percent solids was 45.32%

### Example 5 - Preparation of Coating Formulation with TSPP

The amounts described in Example 4 were used but the order of addition was changed. In this example, RPS TiO₂ was added to a mixture of TSPP and 3103NP, followed by addition of Clay, then RM-232D, then DI water. The percent solids was 44.49%.

### Example 6 - Preparation of Coating Formulation with KTPP

The preparation of Example 1 was followed except that KTPP (18.00 g, 5% solids) was used as the dispersant instead of SHMP. The percent solids was 45.37%.

### Comparative Example 2 - Preparation of Coating Formulation with 9400

The procedure of Example 1 was followed except that 9400 (2.12 g, 42.5% solids) was used as the dispersant instead of SHMP, and DI water (119.10 g) was used. The percent solids was 45.43%.

### Preparation of Coated Paperboard Samples

The coatings were applied to SUS paperboard using a mechanical draw down machine with a #10 wire rod. One coat was applied at 3.5lbs/1000 ft² and placed in an oven for 2 min at 82°C. The sheets were then calendered at 150 °F, 500 psi and 85 ft/min. The gloss target was 35 to 40 at 75 deg gloss. The brightness was measured using Technidyne Brightmeter Model S4-M; average brightness (B_{avg}) for 25 readings of each of the coating formulations. The brightness data for Examples 1-6 and Comparative Examples 1 and 2 (C1, C2) are shown in Table 1:

**Table 1 - Brightness of Coatings Comparison for SHMP, TSPP, KTPP, and 9400**

| Ex. # | 1 | 2 | 3 | 4 | 5 | 6 | C1 | C2 |
|---|---|---|---|---|---|---|---|---|
| B_{avg} | 72.38 | 72.23 | 72.21 | 74.04 | 73.58 | 75.12 | 68.86 | 69.30 |
| stdev | 0.53 | 0.65 | 0.49 | 0.58 | 0.58 | 0.64 | 0.59 | 0.47 |

The results show the dramatic difference in brightness (at least 3 brightness units) between formulations that include the dispersants SHMP (Examples 1-3), TSPP (Example 4-5) or KTPP (Example 6) and the formulations that are either absent of dispersant (C1) or contain a dispersant widely used in the paper coating industry, acrylic homopolymer (C2). The data also show that the order of addition is not critical.

For Example 7 and Comparative Examples 3-5, two grades of TiO₂ were compared, RPS TiO₂ (>98% purity, untreated with inorganic silica) and R-746 TiO₂ (∼95% purity, surface treated with inorganic silica), with and without SHMP dispersant. The formulations include 15 parts RPS or R-746 TiO₂ and 85 parts Clay, based on the weight Clay and RPS or R-746 TiO₂ solids.

### Example 7 - Preparation of RPS TiO₂ Coating with SHMP

RPS TiO₂ (54.95 g, 70.58% solids) was added to Clay (159.40 g, 66.79% solids), 3960 (60.24 g, 49.80% solids), followed by addition of a mixture of SHMP (24.00 g, 5% solids), then RM-232D (0.79 g, 28.32% solids), then DI water (100.62g). The percent solids was 45.36%.

### Comparative Example 3 - Preparation of RPS TiO₂ Coating without Dispersant

RPS TiO₂ (54.95 g, 70.58% solids) was added to Clay (159.40 g, 66.79% solids), 3960 (60.24 g, 49.80% solids), then RM-232D (0.79 g, 28.32% solids), then DI water (124.54 g). The percent solids was 45.06%.

### Comparative Example 4 - Preparation of R-746 TiO₂ Coating without Dispersant

The preparation of Comparative Example 3 was followed except that R-746 TiO₂ (48.82 g, 76.81% solids) was used instead of RPS TiO₂ and for the amount of DI water (128.77 g). The percent solids was 45.23%.

### Comparative Example 5 - Preparation of R-746 TiO₂ Coating with SHMP

The preparation of Example 7 was followed except that R-746 TiO₂ (48.82 g, 76.81 % solids) was used instead of RPS TiO₂ and the amount of DI water (104.73 g) was different. The percent solids was 45.59%.

Table 2 illustrates the parts by weight of the components in the formulation and average brightness for these samples and differences in brightness (ΔB_{avg}) between formulations with and without SHMP for the different grades of TiO₂.

**Table 2 - Brightness Comparisons for Different Grades of TiO₂**

| Example # | C3 | 7 | C4 | C5 |
|---|---|---|---|---|
| B_{avg} | 64.7 | 69.6 | 65.6 | 66.7 |
| Stdev | 0.27 | 0.39 | 0.42 | 0.35 |
| ΔBₐᵥₑ | | 4.9 | | 1.1 |

As the data show, the formulation containing R-746 and no SHMP gives higher brightness than the formulation containing RPS TiO₂ and no SHMP (65.6 versus 64.7); although the addition of SHMP improves brightness somewhat for R-746 (ΔB = 1.1), the improvement for RPS TiO₂ is remarkable (ΔB = 4.9). Thus, the high purity TiO₂ that is untreated with inorganic silica shows a dramatic improvement over the lower purity TiO₂ that is treated with inorganic silica.

## Claims

1. A composition comprising an aqueous dispersion of a) from 3 to 25 weight percent polymeric binder particles containing, based on the weight of the binder, less than 0.05 weight percent of phosphate and phosphonate groups; b) from 5 to 35 weight percent rutile TiO₂ having a purity of at least 98% and which is untreated with inorganic silica; c) from 0.1 to 2 weight percent of a dispersant which is tetrasodium pyrophosphate, tetrapotassium pyrophosphate, sodium tripolyphosphate, potassium tripolyphosphate, or sodium hexametaphosphate; wherein the polymeric binder particles comprise vinyl acetate, vinyl-acrylic, styrene-acrylic, or styrene-butadiene polymer particles; and wherein the weight percentages are all based on the weight of total solids of the composition.

2. The composition of Claim 1 which further includes clay particles or calcium carbonate or both; and a rheology modifier.

3. The composition of either of Claims 1 or 2 wherein the binder particles contain less than 0.01 weight percent phosphate and phosphonate groups; and wherein the TiO₂ has an optical density of 1.05 to 1.15, and a refractive index of from 2.70 to 2.75.

4. The composition of Claim 3 wherein the TiO₂ a particle size distribution with a geometric standard deviation of 1.45 to 1.50.

5. The composition of any of Claims 1 to 4 wherein the dispersant is tetrasodium pyrophosphate, tetrapotassium pyrophosphate, sodium tripolyphosphate, potassium tripolyphosphate, or sodium hexametaphosphate, at a concentration in the range of about 0.2 to 0.6 weight percent, based on the weight of total solids of the composition.

6. The composition of Claim 2 wherein 80 to 100 weight percent of the clay particles or calcium carbonate or both have a particle size finer than 2 µm.

7. A laminate comprising coated or uncoated paper or paperboard; and a 5- to 35-µm thick layer of a film adhered to the coated or uncoated paper or paperboard; wherein the film comprises a) from 3 to 25 weight percent polymeric binder particles containing, based on the weight of the binder, less than 0.05 weight percent phosphate and phosphonate groups; b) from 5 to 35 weight percent rutile TiO₂ having a purity of at least 98% and which is untreated with inorganic silica; c) from 0.1 to 2 weight percent of a dispersant which is tetrasodium pyrophosphate, tetrapotassium pyrophosphate, sodium tripolyphosphate, potassium tripolyphosphate, sodium hexametaphosphate, or potassium hexametaphosphate; wherein the polymeric binder particles comprise vinyl acetate, vinyl-acrylic, styrene-acrylic, or styrene-butadiene polymer particles; and wherein the weight percentages are all based on the weight of total solids in the film.

8. The laminate of Claim 7 wherein the thickness of the film is from 10 to 20 µm.

## Patentansprüche

1. Eine Zusammensetzung, die eine wässrige Dispersion aus Folgendem beinhaltet: a) von 3 bis 25 Gewichtsprozent Polymerbindemittelpartikeln, die, bezogen auf das Gewicht des Bindemittels, weniger als 0,05 Gewichtsprozent Phosphat- und Phosphonatgruppen enthalten; b) von 5 bis 35 Gewichtsprozent Rutil-TiO₂ mit einem Reinheitsgrad von mindestens 98 % und das nicht mit anorganischem Siliciumdioxid behandelt ist; c) von 0,1 bis 2 Gewichtsprozent einem Dispersionsmittel, das Tetranatriumpyrophosphat, Tetrakaliumpyrophosphat, Natriumtripolyphosphat, Kaliumtripolyphosphat oder Natriumhexametaphosphat ist; wobei die Polymerbindemittelpartikel Vinylacetat, Vinylacryl-, Styrolacryl- oder Styrolbutadienpolymerpartikel beinhalten; und wobei sich die Gewichtsprozente alle auf das Gewicht der Gesamtfeststoffe der Zusammensetzung beziehen.

2. Zusammensetzung gemäß Anspruch 1, die ferner Tonpartikel oder Calciumcarbonat oder beides; und einen Rheologiewandler umfasst.

3. Zusammensetzung gemäß Anspruch 1 oder 2, wobei die Bindepartikel weniger als 0,01 Gewichtsprozent Phosphat- und Phosphonatgruppen enthalten; und wobei das TiO₂ eine optische Dichte von 1,05 bis 1,15 und einen Brechungsindex von 2,70 bis 2,75 aufweist.

4. Zusammensetzung gemäß Anspruch 3, wobei das TiO₂ eine Partikelgrößenverteilung mit einer geometrischen Standardabweichung von 1,45 bis 1,50 aufweist.

5. Zusammensetzung gemäß einem der Ansprüche 1 bis 4, wobei das Dispersionsmittel Tetranatriumpyrophosphat, Tetrakaliumpyrophosphat, Natriumtripolyphosphat, Kaliumtripolyphosphat oder Natriumhexametaphosphat bei einer Konzentration in dem Bereich von etwa 0,2 bis 0,6 Gewichtsprozent, bezogen auf das Gewicht der Gesamtfeststoffe der Zusammensetzung, ist.

6. Zusammensetzung gemäß Anspruch 2, wobei 80 bis 100 Gewichtsprozent der Tonpartikel oder des Calciumcarbonats oder beide eine geringere Partikelgröße als 2 µm aufweisen.

7. Ein Laminat, das beschichtetes oder unbeschichtetes Papier oder beschichtete oder unbeschichtete Pappe beinhaltet; und eine 5 bis 35 µm dicke Schicht eines Films, der an dem beschichteten oder unbeschichteten Papier oder an der beschichteten oder unbeschichteten Pappe haftet; wobei der Film a) von 3 bis 25 Gewichtsprozent Polymerbindemittelpartikel, die, bezogen auf das Gewicht des Bindemittels, weniger als 0,05 Gewichtsprozent Phosphat- und Phosphonatgruppen enthalten; b) von 5 bis 35 Gewichtsprozent Rutil-TiO₂ mit einem Reinheitsgrad von mindestens 98 % und das nicht mit anorganischem Siliciumdioxid behandelt ist; c) von 0,1 bis 2 Gewichtsprozent ein Dispersionsmittel, das Tetranatriumpyrophosphat, Tetrakaliumpyrophosphat, Natriumtripolyphosphat, Kaliumtripolyphosphat, Natriumhexametaphosphat oder Kaliumhexametaphosphat ist; wobei die Polymerbindemittelpartikel Vinylacetat, Vinylacryl-, Styrolacryl- oder Styrolbutadienpolymerpartikel beinhalten; und wobei sich die Gewichtsprozente alle auf das Gewicht der Gesamtfeststoffe in dem Film beziehen.

8. Laminat gemäß Anspruch 7, wobei die Dicke des Films 10 bis 20 µm beträgt.

## Revendications

1. Une composition comprenant une dispersion aqueuse a) de 3 à 25 pour cent en poids de particules de liant polymère contenant, rapporté au poids du liant, moins de 0,05 pour cent en poids de groupes phosphate et phosphonate ; b) de 5 à 35 pour cent en poids de TiO₂ rutile ayant une pureté d'au moins 98 % et qui n'est pas traité avec de la silice inorganique ; c) de 0,1 à 2 pour cent en poids d'un dispersant qui est le pyrophosphate tétrasodique, le pyrophosphate tétrapotassique, le tripolyphosphate de sodium, le tripolyphosphate de potassium, ou l'hexamétaphosphate de sodium ; dans laquelle les particules de liant polymère comprennent des particules de polymère d'acétate de vinyle, vinyle-acrylique, styrène-acrylique, ou styrène-butadiène ; et dans laquelle les pourcentages en poids sont tous rapportés au poids de matières solides totales de la composition.

2. La composition de la revendication 1 qui inclut en outre des particules d'argile ou du carbonate de calcium ou les deux ; et un modificateur de rhéologie.

3. La composition de l'une ou l'autre des revendications 1 et 2 dans laquelle les particules de liant contiennent moins de 0,01 pour cent en poids de groupes phosphate et phosphonate ; et dans laquelle le TiO₂ a une masse volumique optique de 1,05 à 1,15, et un indice de réfraction allant de 2,70 à 2,75.

4. La composition de la revendication 3 dans laquelle le TiO₂ a une distribution des tailles de particule avec un écart-type géométrique de 1,45 à 1,50.

5. La composition de n'importe lesquelles des revendications 1 à 4 dans laquelle le dispersant est le pyrophosphate tétrasodique, le pyrophosphate tétrapotassique, le tripolyphosphate de sodium, le tripolyphosphate de potassium, ou l'hexamétaphosphate de sodium, à une concentration comprise dans la gamme allant d'environ 0,2 à 0,6 pour cent en poids, rapporté au poids de matières solides totales de la composition.

6. La composition de la revendication 2 dans laquelle de 80 à 100 pour cent en poids des particules d'argile ou du carbonate de calcium ou des deux ont une taille de particule plus fine que 2 µm.

7. Un stratifié comprenant du papier ou carton enduit ou non enduit ; et une couche de 5 à 35 µm d'épaisseur d'un film collé sur le papier ou carton enduit ou non enduit ; dans lequel le film comprend a) de 3 à 25 pour cent en poids de particules de liant polymère contenant, rapporté au poids du liant, moins de 0,05 pour cent en poids de groupes phosphate et phosphonate ; b) de 5 à 35 pour cent en poids de TiO₂ rutile ayant une pureté d'au moins 98 % et qui n'est pas traité avec de la silice inorganique ; c) de 0,1 à 2 pour cent en poids d'un dispersant qui est le pyrophosphate tétrasodique, le pyrophosphate tétrapotassique, le tripolyphosphate de sodium, le tripolyphosphate de potassium, l'hexamétaphosphate de sodium, ou de l'hexamétaphosphate de potassium ; dans lequel les particules de liant polymère comprennent des particules de polymère d'acétate de vinyle, vinyle-acrylique, styrène-acrylique, ou styrène-butadiène ; et dans lequel les pourcentages en poids sont tous rapportés au poids de matières solides totales dans le film.

8. Le stratifié de la revendication 7 dans lequel l'épaisseur du film va de 10 à 20 µm.
